# EUROPEAN PATENT APPLICATION

(11) **EP 4 509 942 A1**
(43) Date of publication of application: **19.02.2025**
(21) Application number: 22942062.5
(22) Date of filing: 19.05.2022
(51) Int. Cl.: G05F 3/00, G05D 23/20

(54) **POWER CONSUMPTION CONTROL METHOD AND POWER CONSUMPTION CONTROL SYSTEM**

(71) Applicant: Contemporary Amperex Technology Co., Limited, Fujian 352100 (CN)
(72) Inventor: ZHENG, Zhimin, Ningde City, Fujian 352100 (CN); ZHOU, Linggang, Ningde City, Fujian 352100 (CN)
(74) Representative: Jacob, Reuben Ellis
(86) International application number: PCT/CN2022/093750
(87) International publication number: WO 2023/221020

(57) **Abstract**

A power consumption control method (300) and a power consumption control system (200). The power consumption control method (300) comprises: acquiring first data, the first data being used to indicate power consumption information of a power grid (180) (310); and when an energy storage device (100) is connected to the power grid (180), adjusting the temperature of the energy storage device (100) according to the first data (320). The power consumption of the energy storage device (100) can be reduced while the performance of the energy storage device (100) is ensured.

## Description

### FIELD OF TECHNOLOGY

The present application relates to the field of power systems, in particular to a power consumption control method and a power consumption control system.

### BACKGROUND

With the increasing power consumption of a grid, the power regulation and control of the grid are becoming more and more important. In the power regulation and control of the grid, an energy storage device may alleviate the problems of excessive power load and uneven power consumption of the grid to a certain extent.

The temperature of the energy storage device is crucial to the performance of the energy storage device. Therefore, how to provide a power consumption control method to reduce the power consumption of the energy storage device while ensuring the performance of the energy storage device is crucial.

### SUMMARY

The present application provides a power consumption control method and a power consumption control system, which may reduce the power consumption of an energy storage device while ensuring the performance of the energy storage device.

In a first aspect, a power consumption control method is provided. The method includes: acquiring first data, where the first data is configured to indicate power consumption information of a grid; and in a case where an energy storage device is connected to the grid, regulating a temperature of the energy storage device according to the first data.

In an embodiment of the present application, a power consumption control method is provided. The method includes: acquiring first data configured to indicate power consumption information of a grid, and in a case where an energy storage device is connected to the grid, regulating a temperature of the energy storage device according to the first data. According to the power consumption control method, the temperature of the energy storage device may be flexibly regulated according to the power consumption information of the grid in the first data, so that the power consumption of the energy storage device may be reduced while the performance of the energy storage device is ensured.

In one possible implementation, the regulating a temperature of the energy storage device according to the first data includes: controlling a thermal control module to regulate the temperature of the energy storage device according to the first data. In this way, the thermal control module may be controlled according to the power consumption information of the grid in the first data, so as to regulate the temperature of the energy storage device according to the power consumption information, which is beneficial to reducing the power consumption of the thermal control module.

In one possible implementation, the power consumption information includes a peak period of power consumption of the grid and/or a valley period of power consumption of the grid, and the controlling a thermal control module to regulate the temperature of the energy storage device according to the first data includes: controlling the thermal control module to regulate the temperature of the energy storage device to a first temperature during the peak period of power consumption, and/or controlling the thermal control module to regulate the temperature of the energy storage device to a second temperature during the valley period of power consumption, where the first temperature is different from the second temperature.

In this embodiment, the thermal control module may be controlled to regulate the temperature of the energy storage device by a smaller amplitude during the peak period of power consumption; and the thermal control module may be controlled to regulate the temperature of the energy storage device by a larger amplitude during the valley period of power consumption, which is beneficial to reducing the power consumption of the thermal control module during the peak period of power consumption, that is, reducing the consumption of electric quantity in the energy storage device by the thermal control module, so that the energy storage device may transmit more electric energy in the process of transmitting electric energy to the grid or reduce the electric energy required to be acquired in the process of acquiring the electric energy from the grid.

In one possible implementation, the first temperature is greater than the second temperature when the energy storage device is cooled, or the first temperature is less than the second temperature when the energy storage device is heated.

In this embodiment, in a case that the energy storage device is required to be cooled when the outside temperature is high or the temperature of the energy storage device itself is high, the thermal control module is controlled to decrease the temperature of the energy storage device to the first temperature during the peak period of power consumption, and the thermal control module is controlled to decrease the temperature to the second temperature which is less than the first temperature during the valley period of power consumption. In this way, the power consumption of the thermal control module during the peak period of power consumption may be reduced. In a case that the energy storage device is required to be heated when the outside temperature is low or the temperature of the energy storage device itself is low, the thermal control module is controlled to increase the temperature of the energy storage device to the first temperature during the peak period of power consumption, and the thermal control module is controlled to increase the temperature of the energy storage device to the second temperature which is greater than the first temperature during the valley period of power consumption. In this way, the power consumption of the thermal control module during the valley period of power consumption can be reduced.

In one possible implementation, the first temperature is 24°C to 26 °C when the energy storage device is cooled, or the first temperature is 16°C to 18 °C when the energy storage device is heated.

In this embodiment, when the energy storage device is cooled during the peak period of power consumption, the temperature of the energy storage device is decreased to 24°C to 26°C, so that the energy storage device may be in a relatively appropriate temperature range, the normal operation of the energy storage device can be maintained, and the phenomenon that a battery of the energy storage device is on fire due to excessive high temperature is avoided; and when the energy storage device is heated during the peak period of power consumption, the temperature of the energy storage device is increased to 16°C to 18 °C, so that the energy storage device may be in a relatively appropriate temperature range, and the phenomenon that the energy storage device is difficult to operate due to excessive low temperature is avoided.

In one possible implementation, before controlling a thermal control module to regulate the temperature of the energy storage device according to the first data, the method further includes: acquiring an initial temperature of the energy storage device. In this way, subsequent operations may be performed based on the initial temperature of the energy storage device, for example, whether to control the thermal control module to regulate the temperature of the energy storage device or not and what temperature range the temperature of the energy storage device is regulated to.

In one possible implementation, the controlling a thermal control module to regulate the temperature of the energy storage device includes: controlling the thermal control module to regulate the temperature of the energy storage device to the first temperature if the initial temperature of the energy storage device is greater than a third temperature during the peak period of power consumption, where the third temperature is greater than the first temperature and the second temperature, or controlling the thermal control module to regulate the temperature of the energy storage device to the first temperature if the initial temperature of the energy storage device is less than a fourth temperature during the peak period of power consumption, where the fourth temperature is less than the first temperature and the second temperature.

In this embodiment, the thermal control module is controlled to regulate the temperature of the energy storage device to the first temperature when the initial temperature of the energy storage device is greater than the third temperature or less than the fourth temperature, that is, when the initial temperature of the energy storage device is not in a normal temperature range, during the peak period of power consumption. In this way, when the temperature of the energy storage device is in the normal temperature range, the consumption of electric energy caused by controlling the thermal control module to regulate the temperature of the energy storage device during the peak period of power consumption may be avoided, so that the power consumption of the storage device may be further reduced.

In one possible implementation, the first data includes historical power consumption information of the grid. The historical power consumption information may reflect a historical power consumption condition. The temperature of the energy storage device may be flexibly regulated according to the historical power consumption information, which is beneficial to reducing the power consumption of the energy storage device.

In one possible implementation, the first data includes predicted power consumption information of the grid. The predicted power consumption information may reflect a power consumption condition at a current moment or a next moment. A strategy for regulating the temperature of the energy storage device may be determined in real time according to the predicted power consumption information, which is beneficial to reducing the power consumption of the energy storage device.

In one possible implementation, before acquiring first data, the method further includes: sending a prediction request to a server; and the acquiring first data includes: receiving the predicted power consumption information sent by the server. By sending the prediction request to the server, the server may calculate the predicted power consumption information according to the prediction request, and the server sends the predicted power consumption information, so that the power consumption may be controlled according to the predicted power consumption information.

In one possible implementation, before controlling a thermal control module to regulate the temperature of the energy storage device according to the first data, the method further includes: determining a peak period of power consumption of the grid or a valley period of power consumption of the grid according to the first data. In this way, compared with the complex power consumption information, the peak period of power consumption and the valley period of power consumption are simpler and more intuitive, which is convenient to regulate the temperature of the energy storage device according to different power consumption periods.

In one possible implementation, the controlling a thermal control module to regulate the temperature of the energy storage device according to the first data includes: controlling an initial temperature or flow of a fluid in the thermal control module according to the first data. In this way, the initial temperature or flow of the fluid may be flexibly set according to the power consumption information of the grid in the first data, so as to realize different degrees of temperature regulations.

In one possible implementation, the controlling a thermal control module to regulate the temperature of the energy storage device according to the first data includes: sending a control command according to the first data, so that the thermal control module regulates the temperature of the energy storage device according to the control command. In this way, different control commands may be sent according to the power consumption information of the grid in the first data, so that the thermal control module heats or cools the energy storage device according to the different control commands.

In a second aspect, a power consumption control system is provided. The power consumption control system includes a control unit, and the control unit is configured to: acquire first data, where the first data is configured to indicate power consumption information of a grid; and when an energy storage device is connected to the grid, regulate a temperature of the energy storage device according to the first data.

In a third aspect, a readable storage medium is provided. The readable storage medium is configured to store a computer program, and the computer program is configured to perform the power consumption control method according to the first aspect and any one of the possible implementations of the first aspect.

In a fourth aspect, a control unit is provided. The control unit includes a processor and a memory, where the memory is configured to store a computer program, and the processor is configured to invoke the computer program to perform the power consumption control method according to the first aspect and any one of the possible implementations of the first aspect.

In an embodiment of the present application, a power consumption control method is provided. The method includes: acquiring first data configured to indicate power consumption information of a grid, and when an energy storage device is connected to the grid, regulating a temperature of the energy storage device according to the first data. According to the power consumption control method, the temperature of the energy storage device may be flexibly regulated according to the power consumption information of the grid in the first data, so that the power consumption of the energy storage device may be reduced while the performance of the energy storage device is ensured.

### BRIEF DESCRIPTION OF THE DRAWINGS

To describe the technical solutions in the embodiments of the present application more clearly, the following briefly describes the accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a schematic diagram of an energy storage device according to an embodiment of the present application;
FIG. 2 is a schematic diagram of an interaction between an energy storage device and a grid according to an embodiment of the present application;
FIG. 3 is a schematic diagram of a power consumption control method according to an embodiment of the present application;
FIG. 4 is a flowchart of a power consumption control method according to an embodiment of the present application;
FIG. 5 is a flowchart of a thermal control module controlled during a peak period of power consumption according to an embodiment of the present application;
FIG. 6 is a flowchart of a thermal control module controlled during a peak period of power consumption according to an embodiment of the present application;
FIG. 7 is a schematic diagram of a power consumption control system according to an embodiment of the present application;
FIG. 8 is a schematic diagram of an information interaction between a server and a control unit according to an embodiment of the present application; and
FIG. 9 is a schematic diagram of a control unit according to an embodiment of the present application.

In the drawings, the drawings are not drawn to scale.

### DESCRIPTION OF THE EMBODIMENTS

The following further describes the implementations of the present application in detail with reference to the accompanying drawings and embodiments. Detailed description of the following embodiments and accompanying drawings are used to illustratively state the principles of the present application, but not to limit the scope of the present application, that is, the present application is not limited to the embodiments described.

In the description of the present application, it should be noted that unless otherwise specified, "a plurality" means more than two; and the orientation or positional relationship indicated by the terms "upper," "lower," "left," and "right" are merely for convenience of description of the present application and simplicity of description, and do not indicate or imply that the devices or elements referred to must have a particular orientation or be constructed and operated in a particular orientation, and are therefore not to be construed as limiting the present application. Furthermore, the terms "first," "second," "third," and the like are used for descriptive purposes only and are not to be construed as indicating or implying relative importance. "Vertical" is not strictly vertical, but within the allowable range of error. "Parallel" is not strictly parallel, but within the allowable range of error.

Orientation words appearing in the following description are directions shown in the drawings and are not intended to limit the specific structure of the present application. In the description of the present application, it should be noted that unless otherwise expressly defined and limited, the terms "installation", "connection", and "connected" are to be construed broadly, and may be, for example, fixedly connected, detachably connected, integrally connected, in direct connection, or in an indirect connection through an intermediary. Those of ordinary skill in the art can understand the specific meanings of the above terms in the present application according to specific circumstances.

With the development of society, the load of the grid is gradually increasing, and the peak-valley difference of the load curve is gradually increasing. Therefore, the power regulation and control of the grid are becoming more and more important. The energy storage device may realize the storage and release of electric energy. In the power regulation and control of the grid, the energy storage device may alleviate the problems of excessive power load and uneven power consumption of the grid to a certain extent. The temperature of the energy storage device is crucial to the performance of the energy storage device. Therefore, how to provide a power consumption control method to reduce the power consumption of the energy storage device while ensuring the performance of the energy storage device is crucial.

In view of this, an embodiment of the present application provides a power consumption control method, which includes: acquiring first data configured to indicate power consumption information of a grid, and when an energy storage device is connected to the grid, regulating a temperature of the energy storage device according to the first data. According to the power consumption control method, the temperature of the energy storage device may be flexibly regulated according to the power consumption information of the grid in the first data, so that the power consumption of the energy storage device may be reduced while the performance of the energy storage device is ensured.

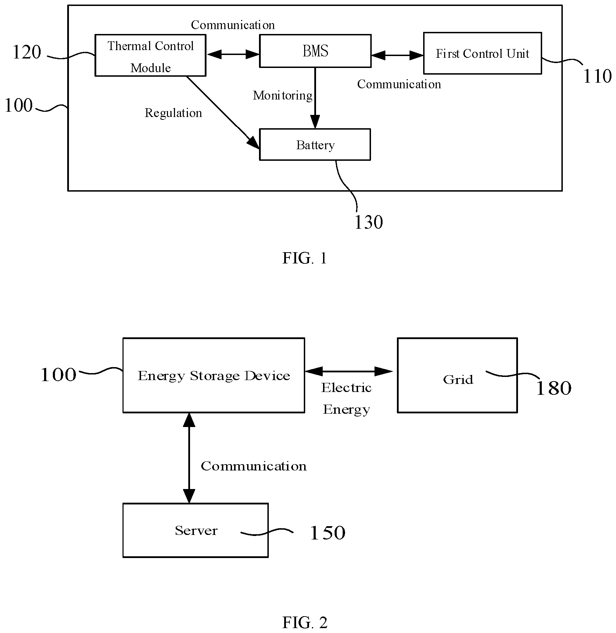

FIG. 1 is a schematic diagram of an energy storage device according to an embodiment of the present application. Optionally, as shown in FIG. 1, the energy storage device 100 includes a first control unit 110, a thermal control module 120, and a battery 130. Optionally, the energy storage device 100 may further include a battery management system (BMS).

The first control unit 110 may be configured to acquire data, monitor network, schedule energy, and the like. For example, the state of the battery 130 is monitored by the BMS, and the first control unit 110 may be in communication with the BMS, that is, information interaction, so as to acquire a temperature of the battery 130; and for another example, the first control unit 110 may acquire the temperature of the battery 130 through other sensors, or acquire the temperature of the energy storage device from other sensors.

The battery 130 may be any type of battery including, but not limited to, a lithium-ion battery, a lithium metal battery, a lithium-sulfur battery, a lead-acid battery, a nickelcadmium battery, a nickel-metal hydride battery, or a lithium-air battery. The battery 130 may be a single battery, or a battery module or a battery pack, and the battery module or the battery pack may be formed by connecting a plurality of batteries in series in parallel. In the embodiment of the present application, the specific type and scale of the battery 130 are not specifically limited.

The thermal control module 120 may be configured to regulate the temperature of the battery 130 or the energy storage device 100, and the thermal control module 120 may be in communication with the BMS, that is, an information interaction.

Optionally, the BMS may be arranged integrally with the battery 130 in the same device/apparatus, or may be arranged outside the battery as a separate apparatus/device.

Optionally, the first control unit 110 may be an energy management system (EMS).

FIG. 2 is a schematic diagram of an interaction between an energy storage device and a grid according to an embodiment of the present application. As shown in FIG. 2, electric energy may be transmitted between the energy storage device 100 and the grid 180, that is, when the energy storage device 100 is connected to the grid 180, the energy storing device 100 may either acquire the electric energy from or transmit the electric energy to the grid 180. The energy storage device 100 may also be in communication with a server 150, that is, an information interaction. The server 150 may include a cloud service system, and the cloud service system may be configured to acquire, send and calculate data. Optionally, the energy storage device 100 may perform an information interaction with the server 150 through the Internet, which is not specifically limited in the embodiments of the present application, as long as the information interaction between the energy storage device and the server may be realized.

Optionally, the energy storage device 100 may be an electric vehicle. In this case, the energy storage device 100 transmits the electric energy to the grid through a charging and discharging device. The charging and discharging device here may be a bidirectional charging pile or a charging pile supporting a vehicle to grid 180 (V2G) mode.

Optionally, the energy storage device 100 may be an electric vehicle, and the electric vehicle is connected to the grid 180 through a charging pile. Optionally, the electric vehicle is connected to the grid 180 through a bidirectional charging pile, so that the electric vehicle may not only transmit the electric energy to the grid, but also acquire the electric energy from the grid.

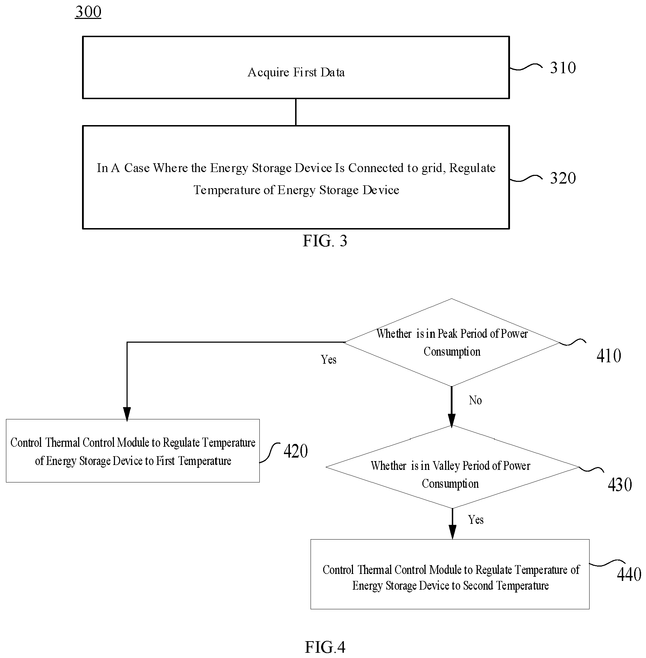

FIG. 3 is a schematic diagram of a power consumption control method according to an embodiment of the present application. As shown in FIG. 3, the method 300 specifically includes the following steps.

Step 310, first data is acquired, where the first data is configured to indicate power consumption information of the grid 180.

Optionally, the first data is acquired before the energy storage device 100 is connected to the grid 180, and the acquired first data is stored in a memory for use in a subsequent process.

Optionally, the first data may also be acquired when the energy storage device 100 is connected to the grid 180, which is not specifically limited in the embodiments of the present application. For example, the first data is acquired when the energy storage device 100 is connected to the grid 180, that is, the energy storage device 100 is connected to the grid 180, which is considered as a trigger condition for acquiring the first data.

Step 320, when the energy storage device 100 is connected to the grid 180, the temperature of the energy storage device 100 is regulated according to the first data.

The regulation of the temperature of the energy storage device 100 is related to the power consumption of the energy storage device 100. For example, when the energy storage device 100 is cooled, the more the energy storage device 100 is cooled, the greater the power consumption of the energy supply device 100 is, and the less the remaining electric quantity of the battery 130 of the energy supply device 100 is. In the case that the energy storage device 100 is connected to the grid 180, when the energy storage device 100 needs to acquire electric energy from the grid 180, the more the remaining electric quantity of the energy storing device 100 is, the less the electric quantity that the energy storing device 100 needs to acquire from the grid 180 is, or in the case that the energy storage device 100 is connected to the grid 180, when the energy storage device 100 transmits electric energy to the grid 180, the more the remaining electric quantity of the energy storage device 100 is, the more the electric quantity that the energy storage device 100 may transmit to the grid is. Therefore, the regulation of the temperature of the energy storage device 100 is closely related to the power consumption of the energy storage device 100, and is also closely related to the power regulation and control of the grid 180.

Optionally, when the energy storage device 100 is connected to the grid 180, the energy storage device 100 may transmit the electric energy to the grid 180, the energy storage device 100 may acquire the electric energy from the grid 180, or the energy storage device 100 may neither transmit the electric energy to nor acquire the electric energy from the grid 180.

The first data includes power consumption information of the grid 180, and the temperature of the energy storage device 100 is regulated according to the first data. On one hand, the temperature of the energy storage device 100 may be regulated in an appropriate temperature range to ensure the performance of the energy storage device 100; and on the other hand, the temperature of the energy storage device 100 may be flexibly regulated according to the power consumption information, which is beneficial to reducing the power consumption of the energy storage device 100.

In an embodiment of the present application, a power consumption control method is provided. The method includes: acquiring first data configured to indicate power consumption information of a grid, and when the energy storage device is connected to the grid, regulating a temperature of the energy storage device according to the first data. According to the power consumption control method, the temperature of the energy storage device may be flexibly regulated according to the power consumption information of the grid in the first data, so that the power consumption of the energy storage device may be reduced while the performance of the energy storage device is ensured.

Optionally, in an embodiment of the present application, the regulating a temperature of an energy storage device 100 according to the first data includes: controlling the thermal control module 120 to regulate the temperature of the energy storage device 100 according to the first data.

The thermal control module 120 may be configured to regulate the temperature of the energy storage device 100. That is, the thermal control module 120 may be configured to heat or cool the energy storage device 100. The more the thermal control module 120 cools or heats the energy storage device 100, the greater the power consumption of the thermal control module 120, and the greater the power consumption of the energy storage device 100.

The first data includes power consumption information of the grid 180, and the thermal control module 120 is controlled according to the first data, so that the thermal control module 120 may be flexibly controlled according to the power consumption information to enable the thermal management module 120 to perform different temperature regulations on the energy storage device 100, which is beneficial to reducing the power consumption of the thermal control module 120.

Optionally, the thermal control module 120 is a thermal management system, and the thermal management system may include an air cooling system or a liquid cooling system as long as the temperature of the energy storage device 100 may be adjusted, which is not specifically limited in the embodiments of the present application.

Optionally, in an embodiment of the present application, the power consumption information includes a peak period of power consumption of the grid 180 and/or a valley period of power consumption of the grid, and the controlling a thermal control module 120 to regulate the temperature of the energy storage device 100 according to the first data includes: controlling the thermal control module 120 to regulate the temperature of the energy storage device 100 to a first temperature during the peak period of power consumption, and/or controlling the thermal control module 120 to regulate the temperature of the energy storage device 100 to a second temperature during the valley period of power consumption, where the first temperature is different from the second temperature.

The thermal control module 120 may be controlled to regulate the temperature of the energy storage device 100 by a smaller amplitude during the peak period of power consumption; and the thermal control module 120 may be controlled to regulate the temperature of the energy storage device 100 by a larger amplitude during the valley period of power consumption, which is beneficial to reducing the power consumption of the thermal control module 120 during the peak period of power consumption, that is, reducing the consumption of electric quantity in the energy storage device 100 by the thermal control module 120, so that the energy storage device 100 may transmit more electric energy in the process of transmitting electric energy to the grid or reduce the electric energy required to be acquired in the process of acquiring the electric energy from the grid.

By controlling the thermal control module 120 according to the peak period of power consumption and/or the valley period of power consumption, not only is the power consumption of the thermal control module 120 reduced beneficially, but also the uniformity of the power load of the grid 180 is improved beneficially, thereby being beneficial to improving the operation efficiency and reliability of the grid 120.

Optionally, in an embodiment of the present application, the first temperature is greater than the second temperature when the energy storage device 100 is cooled, and the first temperature is less than the second temperature when the energy storage device 100 is heated.

FIG. 4 is a flowchart of a power consumption control method according to an embodiment of the present application. As shown in FIG. 4, the method specifically includes the following steps.

Step 410, it is determined whether a current moment is the peak period of power consumption or not. If the current moment is in the peak period of power consumption, step 420 is performed. If the current moment is not in the peak period of power consumption, step 430 is performed.

Specifically, step 410 may be performed after step 310, and the first data acquired in step 310 includes a peak period of power consumption of the grid and a valley period of power consumption of the grid.

Step 420, the thermal control module 120 is controlled to regulate the temperature of the energy storage device 100 to the first temperature.

Specifically, when the energy storage device 100 is cooled during the peak period of power consumption, the temperature of the energy storage device 100 is regulated to the first temperature. Because the first temperature is greater than the second temperature, decreasing the temperature of the energy storage device 100 to the first temperature may reduce the electric quantity consumed by the thermal control module 100, as compared to directly decreasing the temperature of the energy storage device 100 to a lower second temperature.

In an application scenario, for example, when the energy storage device 100 is connected to the grid 180, if the energy storage device 100 is acquiring electric energy from the grid 180 at this moment, since the electric quantity consumed by the thermal control module 120 is reduced, the electric quantity consumed by the entire energy storage device 100 is reduced, and accordingly, the electric energy required to be acquired from the grid 180 by the energy storage device 100 is also reduced, which not only reduces the power consumption of the energy storage device 100 but also is beneficial to reducing the load of the grid 180 during the peak period of power consumption, thereby being beneficial to maintaining the stability and reliability of the grid 180.

Similarly, when the energy storage device 100 is heated during the peak period of power consumption, the temperature of the energy storage device 100 is regulated to the first temperature. Because the first temperature is less than the second temperature, the power consumption of the energy storage device 100 may also be reduced, and the load of the grid 180 during the peak period of power consumption may also be reduced at the same time.

In another application scenario, for example, when the energy storage device 100 is connected to the grid 180, if the energy storage device 100 is transmitting electric energy to the grid 180 at this moment, since the electric quantity consumed by the thermal control module 120 is reduced, the electric quantity consumed by the entire energy storage device 100 is reduced, and accordingly, the energy storage device 100 may have more electric quantity left to transmit the electric energy to the grid 180, which is beneficial to not only reducing the power consumption of the energy storage device 100 but also transmitting more electric energy to the grid 180 by the energy storage device 100, thereby being beneficial to realizing peak-load shifting of the power load of the grid.

Similarly, when the energy storage device 100 is heated during the peak period of power consumption, the temperature of the energy storage device 100 is regulated to the first temperature. Because the first temperature is less than the second temperature, the power consumption of the energy storage device 100 may also be reduced, and the energy storage device 100 transmits more electric energy to the grid 180 beneficially, thereby being beneficial to realizing peak-load shifting of the power load of the grid.

Step 430, it is determined whether the current moment is the valley period of power consumption or not. If the current moment is in the valley period of power consumption, step 440 is performed.

Step 440, the thermal control module 120 is controlled to regulate the temperature of the energy storage device 100 to the second temperature.

Specifically, when the energy storage device 100 is cooled during the valley period of power consumption, the temperature of the energy storage device is decreased to the second temperature. Because the second temperature is less than the first temperature, the temperature of the energy storage device 100 is maintained in a lower reasonable temperature range beneficially before the peak period of power consumption is reached, thereby being beneficial to reducing the power consumption of the thermal control module 120 during the peak period of power consumption, and being also beneficial to realizing peak-load shifting of the power load of the grid at the same time.

Similarly, the energy storage device 100 is heated to the second temperature during the valley period of power consumption, and the second temperature is greater than the first temperature, which also has a similar effect and is not described herein again.

Optionally, if the current moment is not in the valley period of power consumption, the step of controlling the thermal control module 120 to regulate the temperature of the energy storage device 100 is performed. That is, the thermal control module 120 may be controlled to regulate the temperature of the energy storage device 100 when the current moment is neither in the peak period of power consumption nor in the valley period of power consumption. The thermal control module 120 may be controlled to regulate the temperature of the energy storage device 100 to the first temperature, or to the second temperature, or to a temperature other than the first temperature and the second temperature as long as the temperature of the energy storage device 100 is regulated to a temperature at which the energy storage device 100 may operate normally. The specific temperature value to which the temperature of the energy storage device 100 is regulated may be set according to the actual situation and the specific condition of the energy storage device, and the specific temperature value may be preset and stored in the memory, so as to be automatically acquired by the first control unit 110 or other controllers.

Optionally, in an embodiment of the present application, the first temperature is 24°C to 26°C when the energy storage device 100 is cooled, or the first temperature is 16°C to 18°C when the energy storage device 100 is heated.

The energy storage device 100 generates heat during operation, and when the temperature of the energy storage device 100 exceeds a certain value, a fire may occur. Therefore, when the energy storage device 100 is cooled during the peak period of power consumption, the temperature of the energy storage device 100 is decreased to 24°C to 26°C, so that the energy storage device 100 may be in a relatively appropriate temperature range, the normal operation of the energy storage device 100 can be maintained, and the phenomenon that the battery of the energy storage device 100 is on fire due to too high temperature is avoided.

When the temperature of the external environment is too low, the temperature of the energy storage device 100 affected by the external environment is also low. When the temperature of the energy storage device 100 is smaller than a certain value, the normal operation of the energy storage device 100 may be affected, for example, the energy storage device 100 cannot be charged and discharged, and the charging and discharging rate is too low. Therefore, when the energy storage device 100 is heated during the peak period of power consumption, the temperature of the energy storage device 100 is heated to 16°C to 18°C, so that the energy storage device 100 may be in a relatively appropriate temperature range, which avoids the phenomenon that the battery of the energy storage device 100 is difficult to operate due to too low temperature.

Optionally, the second temperature is 19°C to 23°C when the energy storage device 100 is cooled, or the second temperature is 20°C to 24°C when the energy storage device 100 is heated. The specific values of the first temperature and the second temperature may be set according to the actual environment or different energy storage devices, which is not specifically limited in the embodiments of the present application.

Optionally, in an embodiment of the present application, before controlling a thermal control module 120 to regulate the temperature of the energy storage device 100 according to the first data, the method 300 further includes: acquiring an initial temperature of the energy storage device 100. In this way, subsequent operations may be performed based on the initial temperature of the energy storage device 100, for example, whether to control the thermal control module 120 to regulate the temperature of the energy storage device or not and what temperature range the temperature of the energy storage device 100 is regulated to.

Optionally, in an embodiment of the present application, the controlling a thermal control module 120 to regulate the temperature of the energy storage device 100 includes: controlling the thermal control module 120 to regulate the temperature of the energy storage device 100 to the first temperature if the initial temperature of the energy storage device 100 is greater than a third temperature during the peak period of power consumption, where the third temperature is greater than the first temperature and the second temperature, or controlling the thermal control module 120 to regulate the temperature of the energy storage device 100 to the first temperature if the initial temperature of the energy storage device 100 is less than a fourth temperature during the peak period of power consumption, where the fourth temperature is less than the first temperature and the second temperature.

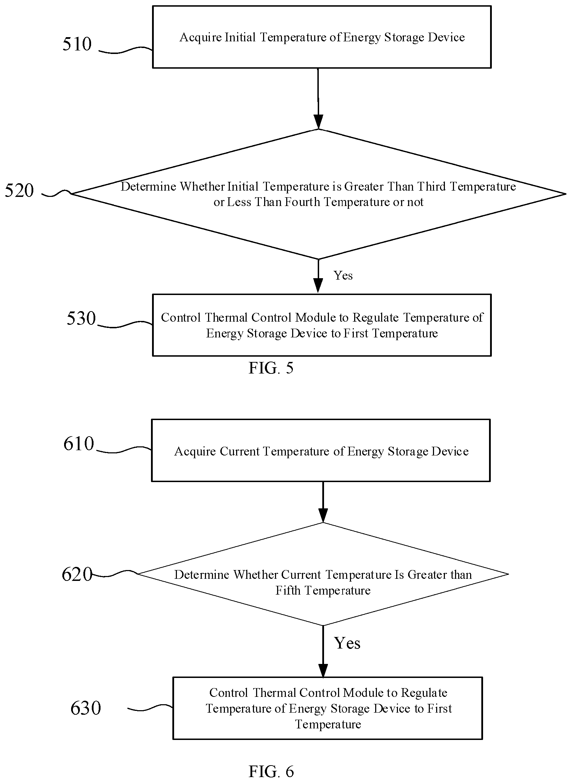

FIG. 5 is a flowchart of a thermal control module controlled during a peak period of power consumption according to an embodiment of the present application. As shown in FIG. 5, the method specifically includes the following steps.

Step 510, an initial temperature of the energy storage device 100 is acquired.

Optionally, the BMS is configured to acquire an initial temperature of the battery 130 of the energy storage device 100 and send the initial temperature of the battery 130 to the first control unit 110.

Step 520, it is determined whether the initial temperature is greater than the third temperature or less than the fourth temperature or not. The third temperature is greater than the first temperature and the second temperature, and the fourth temperature is less than the first temperature and the second temperature. If the initial temperature of the energy storage device 100 is greater than the third temperature or less than the fourth temperature, step 530 is performed.

Specifically, only when the temperature of the energy storage device 100 is greater than the third temperature or less than the fourth temperature during the peak period of power consumption, the thermal control module 120 is controlled to cool the energy storage device 100. In this way, when the temperature of the energy storage device 100 is greater than the third temperature or less than the fourth temperature, the thermal control module 120 is controlled to regulate the temperature of the energy storage device 100. That is, when the temperature of the energy storage device 100 is greater than or equal to the fourth temperature and less than or equal to the third temperature, the thermal control module 120 is controlled not to regulate the temperature of the energy storage device 100, thereby reducing the power consumption of the thermal control module 120 during the peak period of power consumption.

Optionally, the third temperature may be the highest temperature at which the energy storage device 100 maintains normal operation, and the fourth temperature may be the lowest temperature at which the energy storage device 100 maintains normal operation.

Optionally, the third temperature may be 27°C to 30°C, and the fourth temperature may be 10°C to 15°C. The values of the third temperature and the fourth temperature may be specifically set according to the actual environment and the energy storage device, which is not specifically limited in the embodiments of the present application.

Step 530, the thermal control module 120 is controlled to regulate the temperature of the energy storage device 100 to the first temperature.

In this embodiment, when the temperature of the energy storage device 100 is in the normal temperature range, the consumption of electric energy caused by controlling the thermal control module 120 to regulate the temperature of the energy storage device 100 during the peak period of power consumption may be avoided, so that the power consumption of the energy storage device 100 may be further reduced.

FIG. 6 is a flowchart of a thermal control module controlled during a peak period of power consumption according to an embodiment of the present application. As shown in FIG. 6, the method specifically includes the following steps.

Step 610, a current temperature of the energy storage device 100 is acquired.

Optionally, the BMS is configured to acquire the current temperature of the battery 130 of the energy storage device 100 and send the current temperature of the battery 130 to the first control unit 110.

Optionally, step 610 may be performed after step 530.

Step 620, it is determined whether the current temperature of the energy storage device 100 is greater than the fifth temperature or not.

After the temperature of the energy storage device 100 is regulated to the first temperature, the temperature of the energy storage device 100 may continue to be increased as the energy storage device 100 operates. If the temperature of the energy storage device 100 is greater than the fifth temperature, step 630 is performed.

Optionally, the fifth temperature may be the highest temperature at which the energy storage device 100 maintains normal operation. The fifth temperature may be equal to or greater than the third temperature, which is not specifically limited in the embodiments of the present application.

Step 630, the thermal control module 120 is controlled to regulate the temperature of the energy storage device 100 to the first temperature.

Optionally, in an embodiment of the present application, the first data includes historical power consumption information of the grid.

Optionally, the historical power consumption information may be the power consumption information of the previous day or the power consumption information of a given day. The power consumption information of a given day may be the power consumption information of a specific day, for example, both the given day and the current day are Friday, or both the given day and the current day are April 1. The historical power consumption information may be directly acquired from a power exchange center or an exchange center of an integrated energy service company, and may also be indirectly acquired from the power exchange center or the exchange center of the integrated energy service company through the cloud service system.

The historical power consumption information may reflect a historical power consumption condition, which is similar to that of the current day. The temperature of the energy storage device 100 may be regulated according to the historical power consumption condition, which is beneficial to reducing the power consumption of the energy storage device 100.

Optionally, in an embodiment of the present application, the first data includes predicted power consumption information of the grid 180.

Optionally, the predicted power consumption information is acquired by the cloud service system through calculation according to the historical power consumption information. The predicted power consumption information may reflect a power consumption condition at a current moment or a next moment, so that the temperature of the energy storage device 100 may be regulated in advance or in real time according to the predicted power consumption information, which is beneficial to reducing the power consumption of the energy storage device 100.

Optionally, in an embodiment of the present application, before acquiring first data, the method 300 further includes: sending a prediction request to a server 150; and the acquiring first data includes: receiving the predicted power consumption information sent by the server 150. By sending the prediction request to the server 150, the server 150 may calculate the predicted power consumption information according to the prediction request, and the server 150 sends the predicted power consumption information, so that the power consumption may be controlled according to the predicted power consumption information.

Optionally, in an embodiment of the present application, before controlling a thermal control module 120 according to the first data, the method 300 further includes: determining a peak period of power consumption of the grid 180 or a valley period of power consumption of the grid according to the first data.

Optionally, the first data may be the peak period of power consumption and the valley period of power consumption, or may be a power consumption curve. When the first data is the power consumption curve, the corresponding peak period of power consumption and valley period of power consumption in the power consumption curve may be analyzed and calculated according to the power consumption curve. In this way, compared with the complex power consumption information such as the power consumption curve, the peak period of power consumption and the valley period of power consumption are simpler and more intuitive, which is convenient to regulate the temperature of the energy storage device 100 according to different power consumption periods.

Optionally, in an embodiment of the present application, the controlling a thermal control module 120 to regulate the temperature of the energy storage device 100 according to the first data includes: controlling an initial temperature or flow of a fluid in the thermal control module 120 according to the first data.

Optionally, the thermal control module 120 contains a fluid therein, and the fluid is configured to regulate the temperature of the energy storage device 100. For example, the flow of the fluid may be increased when the degree of regulation to the temperature of the energy storage device 100 is relatively large. For another example, the initial temperature of the fluid may be increased when the energy storage device 100 is heated and the degree of heating is relatively large. In this way, the initial temperature or flow of the fluid may be flexibly set according to the power consumption information of the grid in the first data, so as to realize different degrees of temperature regulations.

Optionally, in an embodiment of the present application, the controlling a thermal control module 120 to regulate the temperature of the energy storage device 100 according to the first data includes: sending a control command according to the first data, so that the thermal control module 120 regulates the temperature of the energy storage device 100 according to the control command.

Optionally, the control command may be sent to the BMS, and the BMS sends the control command to the thermal control module 120, so that the thermal control module 120 regulates the temperature of the energy storage device 100 according to the control command.

Optionally, the control command may include information: increasing/decreasing the temperature of the energy storage device 100 to the first temperature, increasing/decreasing the temperature of the energy storage device 100 to the second temperature and the like.

In this embodiment, different control commands may be sent according to the power consumption information of the grid 180 of the first data, so that the thermal control module 120 heats or cools the energy storage device 100 according to the different control commands.

Optionally, the power consumption control method according to the embodiment of the present application is performed by the first control unit 110.

Optionally, the power consumption control method according to the embodiment of the present application is performed by a control unit other than the first control unit 110.

Optionally, the temperature of the energy storage device 100 may be regulated by other means other than sending the control command, which is not specifically limited in the embodiment of the present application.

The embodiments of the method according to the present application are described in detail above with reference to FIG. 1 to 6, and the embodiments of the power consumption control system according to the present application will be described in detail below. It should be understood that the embodiments of the method correspond to the embodiments of the system, and similar descriptions may be made with reference to the embodiments of the method.

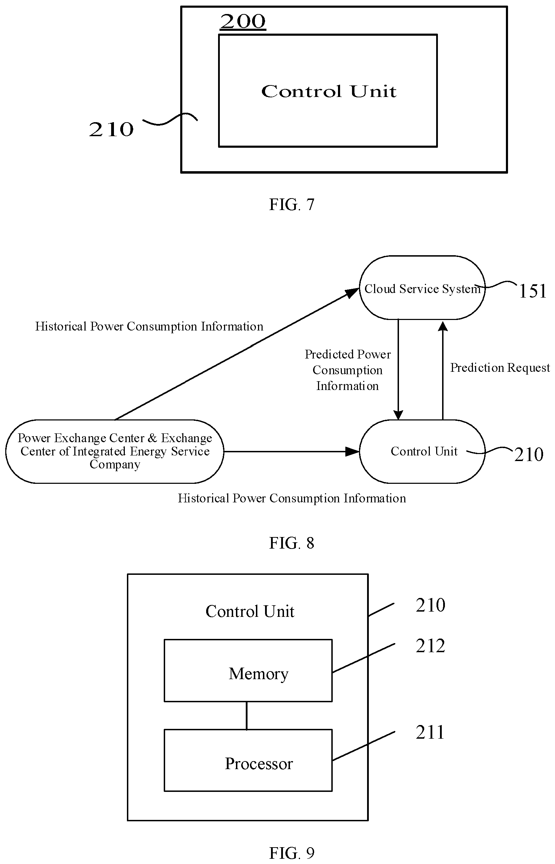

FIG. 7 is a schematic diagram of a power consumption control system according to an embodiment of the present application. As shown in FIG. 7, the power consumption control system 200 includes a control unit 210. The control unit 210 is configured to: acquire first data, where the first data is configured to indicate power consumption information of a grid 180, and when an energy storage device 100 is connected to the grid 180, regulate a temperature of the energy storage device 100 according to the first data.

Optionally, in an embodiment of the present application, the control unit 210 is configured to: control a thermal control module 120 to regulate the temperature of the energy storage device 100 according to the first data.

Optionally, in an embodiment of the present application, the power consumption information includes a peak period of power consumption of the grid 180 and/or a valley period of power consumption of the grid, and the control unit 210 is configured to: control the thermal control module 120 to regulate the temperature of the energy storage device 100 to a first temperature during the peak period of power consumption, and/or control the thermal control module 120 to regulate the temperature of the energy storage device to a second temperature during the valley period of power consumption, where the first temperature is different from the second temperature.

Optionally, in an embodiment of the present application, the control unit 210 is configured to: acquire an initial temperature of the energy storage device 100.

Optionally, in an embodiment of the present application, the control unit 210 is configured to: control the thermal control module 120 to regulate the temperature of the energy storage device to the first temperature if the initial temperature of the energy storage device 100 is greater than a third temperature during the peak period of power consumption, where the third temperature is greater than the first temperature and the second temperature, or control the thermal control module 120 to regulate the temperature of the energy storage device 100 to the first temperature if the initial temperature of the energy storage device 100 is less than a fourth temperature during the peak period of power consumption, where the fourth temperature is less than the first temperature and the second temperature.

Specifically, the BMS detects an initial temperature of the battery 130 of the energy storage device 100 and sends the initial temperature to the control unit 210. The control unit 210 determines a relationship between the initial temperature and the third temperature or the fourth temperature, and controls the thermal control module 120 according to the relationship between the initial temperature and the third temperature or the fourth temperature.

Optionally, when the control unit 210 determines that the initial temperature is greater than the third temperature, the control unit 210 sends a cooling command to the BMS, the BMS sends the cooling command to the thermal control module 120, and the thermal control module 120 regulates the temperature of the energy storage device 100 to the first temperature according to the cooling command.

Optionally, when the control unit 210 determines that the initial temperature is less than the fourth temperature, the control unit 210 sends a heating command to the BMS, the BMS sends the heating command to the thermal control module 120, and the thermal control module 120 regulates the temperature of the energy storage device 100 to the first temperature according to the heating command.

Optionally, in an embodiment of the present application, the power consumption control system 200 further includes a server 150. The server 150 is configured to receive a prediction request sent by the control unit 210 and calculate predicted power consumption information according to the prediction request; and the control unit 160 is configured to receive the predicted power consumption information.

FIG. 8 is a schematic diagram of an information interaction between a server and a control unit according to an embodiment of the present application. As shown in FIG. 8, the cloud service system 151 receives the prediction request from the control unit 210, and calculates predicted power consumption information according to the prediction request. The cloud service system is also configured to acquire the historical power consumption information from a power exchange center or an exchange center of an integrated energy service company, and calculate predicted power consumption information according to the historical power consumption information.

Optionally, in an embodiment of the present application, the control unit 210 is configured to: determine the peak period of power consumption of the grid 180 or the valley period of power consumption of the grid 180 according to the first data.

Optionally, in an embodiment of the present application, the control unit 210 is configured to: control the initial temperature or flow of the fluid in the thermal control module according to the first data.

Optionally, in an embodiment of the present application, the control unit 210 is configured to: send a control command according to the first data, and the thermal control module 120 is configured to: regulate the temperature of the energy storage device 100 according to the control command.

An embodiment of the present application provides a readable storage medium. The readable storage medium is configured to store a computer program, and the computer program is configured to perform the power consumption control method according to any of the foregoing embodiments.

An embodiment of the present application provides a computer program including a command. The computer program, when executed, enables a computer to perform the power consumption control method according to any one of the foregoing embodiments.

FIG. 9 is a schematic diagram of a control unit according to an embodiment of the present application. As shown in FIG. 9, the embodiment of the present application provides a control unit 210, which includes a processor 211 and a memory 212, where the memory 212 is configured to store a computer program, and the processor 211 is configured to invoke the computer program to perform the power consumption control method according to any one of the foregoing embodiments.

The processor 211 according to the embodiment of the present application may be an integrated circuit chip having signal processing capability. In the process of implementation, the steps of the embodiments of the method described above may be performed by hardware integrated logic circuits in the processor or by commands in the form of software. The above processor may be a general-purpose processor, a digital signal processor (DSP), an application specific integrated circuit (ASIC), a field programmable gate array (FPGA) or other programmable logic devices, a discrete gate or a transistor logic device, and a discrete hardware component. The methods and steps disclosed in the embodiments of the present application may be implemented or performed. The general-purpose processor may be a microprocessor or the processor may be any conventional processor. The steps of the method disclosed in combination with the embodiments of the present application may be directly performed by a hardware decoding processor, or performed by a combination of hardware and software modules in the decoding processor. The software module may be located in a mature storage medium in the art, such as a random access memory, a flash memory, a read-only memory, a programmable read-only memory or an electrically erasable programmable read-only memory, and a register. The storage medium is located in the memory, and the processor reads the information in the memory and completes the steps of the above method in combination with the hardware.

The memory 212 according to the embodiments of the present application may be a volatile memory or a non-volatile memory, or may include both a volatile memory and a non-volatile memory. The non-volatile memory may be a read-only memory (ROM), a programmable ROM (PROM), an erasable PROM (EPROM), an electrically erasable programmable read-only memory (EEPROM), or a flash memory. The volatile memory may be a random access memory (RAM), which functions as an external cache. By way of example, and not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memories of the systems and methods described herein are intended to include, but is not limited to, these and any other suitable types of memories.

It should be understood that the specific examples herein are intended only to assist those skilled in the art in better understanding the embodiments of the present application and are not intended to limit the scope of the embodiments of the present application.

It should also be understood that in various embodiments of the present application, the serial number of each process does not mean the performing order, and the performing order of each process should be determined by its function and internal logic, and should not constitute any limitation to the implementation process of the embodiments of the present application.

It should also be understood that the various embodiments described in the specification may be implemented alone or in combination, which is not limited by and the embodiments of the present application.

Although the present application has been described with reference to preferred embodiments, various improvements can be made thereto and equivalents can be used for replacement of members therein without departing from the scope of the present application. In particular, the technical features mentioned in the various embodiments may be combined in any manner as long as there is no structural conflict. The present application is not restricted to particular embodiments disclosed herein, but to comprise all technical solutions falling in the scope of the claims.

## Claims

1. A power consumption control method, comprising:
acquiring first data configured to indicate power consumption information of a grid; and
in a case where an energy storage device is connected to the grid, regulating a temperature of the energy storage device according to the first data.

2. The method according to claim 1, wherein the regulating a temperature of the energy storage device according to the first data comprises:
controlling a thermal control module to regulate the temperature of the energy storage device according to the first data.

3. The method according to claim 2, wherein the power consumption information comprises a peak period of power consumption of the grid and/or a valley period of power consumption of the grid, and the controlling a thermal control module to regulate the temperature of the energy storage device according to the first data comprises:
controlling the thermal control module to regulate the temperature of the energy storage device to a first temperature during the peak period of power consumption, and/or
controlling the thermal control module to regulate the temperature of the energy storage device to a second temperature during the valley period of power consumption, the first temperature being different from the second temperature.

4. The method according to claim 3, wherein the first temperature is greater than the second temperature in a case where the energy storage device is cooled, or
the first temperature is less than the second temperature in a case where the energy storage device is heated.

5. The method according to claim 4, wherein the first temperature is 24°C to 26°C in a case where the energy storage device is cooled, or
the first temperature is 16°C to 18°C in a case where the energy storage device is heated.

6. The method according to any one of claims 3-5, wherein before controlling a thermal control module according to the first data, the method further comprises:
acquiring an initial temperature of the energy storage device.

7. The method according to claim 6, wherein the controlling a thermal control module to regulate the temperature of the energy storage device comprises:
controlling the thermal control module to regulate the temperature of the energy storage device to the first temperature if the initial temperature of the energy storage device is greater than a third temperature during the peak period of power consumption, the third temperature being greater than the first temperature and the second temperature, or
controlling the thermal control module to regulate the temperature of the energy storage device to the first temperature if the initial temperature of the energy storage device is less than a fourth temperature during the peak period of power consumption, the fourth temperature being less than the first temperature and the second temperature.

8. The method according to any one of claims 1-7, wherein the first data comprises historical power consumption information of the grid.

9. The method according to any one of claims 1-7, wherein the first data comprises predicted power consumption information of the grid.

10. The method according to claim 9, wherein before acquiring first data, the method further comprises:
sending a prediction request to a server; and
the acquiring first data comprises:
receiving the predicted power consumption information sent by the server.

11. The method according to any one of claims 2-10, wherein before controlling a thermal control module to regulate the temperature of the energy storage device according to the first data, the method further comprises:
determining the peak period of power consumption of the grid or the valley period of power consumption of the grid according to the first data.

12. The method according to any one of claims 2-11, wherein the controlling a thermal control module to regulate the temperature of the energy storage device according to the first data comprises:
controlling an initial temperature or flow of a fluid in the thermal control module according to the first data.

13. The method according to any one of claims 2-12, wherein the controlling a thermal control module to regulate the temperature of the energy storage device according to the first data comprises:
sending a control command according to the first data, so that the thermal control module regulates the temperature of the energy storage device according to the control command.

14. A power consumption control system, comprising: a control unit,
wherein the control unit is configured to:
acquire first data configured to indicate power consumption information of a grid; and
in a case where an energy storage device is connected to the grid, regulate a temperature of the energy storage device according to the first data.

15. The power consumption control system according to claim 14, wherein the control unit is configured to:
control a thermal control module to regulate the temperature of the energy storage device according to the first data.

16. The power consumption control system according to claim 15, wherein the power consumption information comprises a peak period of power consumption of the grid and/or a valley period of power consumption of the grid, and the control unit is configured to:
control the thermal control module to regulate the temperature of the energy storage device to a first temperature during the peak period of power consumption, and/or
control the thermal control module to regulate the temperature of the energy storage device to a second temperature during the valley period of power consumption, the first temperature being different from the second temperature.

17. The power consumption control system according to claim 16, wherein the first temperature is greater than the second temperature in a case where the energy storage device is cooled, or
the first temperature is less than the second temperature in a case where the energy storage device is heated.

18. The power consumption control system according to claim 17, wherein the first temperature is 24°C to 26°C in a case where the energy storage device is cooled, or
the first temperature is 16°C to 18°C in a case where the energy storage device is heated.

19. The power consumption control system according to any one of claims 16-18, wherein the control unit is configured to:
acquire an initial temperature of the energy storage device.

20. The power consumption control system according to claim 19, wherein the control unit is configured to:
control the thermal control module to regulate the temperature of the energy storage device to the first temperature if the initial temperature of the energy storage device is greater than a third temperature during the peak period of power consumption, the third temperature being greater than the first temperature and the second temperature, or
control the thermal control module to regulate the temperature of the energy storage device to the first temperature if the initial temperature of the energy storage device is less than a fourth temperature during the peak period of power consumption, the fourth temperature being less than the first temperature and the second temperature.

21. The power consumption control system according to any one of claims 14-20, wherein the first data comprises historical power consumption information of the grid.

22. The power consumption control system according to any one of claims 14-20, wherein the first data comprises predicted power consumption information of the grid.

23. The power consumption control system according to claim 22, further comprising a server,
wherein
the server is configured to receive a prediction request sent by the control unit and calculate the predicted power consumption information according to the prediction request; and
the control unit is configured to receive the predicted power consumption information.

24. The power consumption control system according to any one of claims 14-23, wherein the control unit is configured to:
determine the peak period of power consumption of the grid or the valley period of power consumption of the grid according to the first data.

25. The power consumption control system according to any one of claims 15-24, wherein the control unit is configured to:
control an initial temperature or flow of a fluid in the thermal control module according to the first data.

26. The power consumption control system according to any one of claims 15-25, wherein the control unit is configured to:
send a control command according to the first data; and
the thermal control module is configured to:
regulate the temperature of the energy storage device according to the control command.

27. A readable storage medium, wherein the readable storage medium is configured to store a computer program, and the computer program is configured to perform the power consumption control method according to any one of claims 1-13.

28. A control unit, comprising a processor and a memory, the memory being configured to store a computer program, and the processor being configured to invoke the computer program to perform the power consumption control method according to any one of claims 1-13.
